# EUROPEAN PATENT APPLICATION

(11) **EP 3 505 741 A1**
(43) Date of publication of application: **03.07.2019**
(21) Application number: 17211039.7
(22) Date of filing: 29.12.2017
(51) Int. Cl.: F02C 9/20

(54) **METHOD FOR OPERATING A GAS TURBINE**

(71) Applicant: Siemens Aktiengesellschaft, 80333 München (DE)
(72) Inventor: Jaerling, Patrik, 58943 Linköping (SE)

(57) **Abstract**

The invention relates to a method for operating a gas turbine (1), the gas turbine (1) comprises a compressor (2) with variable guide vanes (13), a combustion chamber (3), a turbine (4), and an exhaust gas carbon monoxide sensor (19), comprising the steps of:
a) detecting carbon monoxide (8) in the exhaust gas (6) of the gas turbine (1) with the exhaust gas carbon monoxide sensor (19),
b) determining a guide vanes angle control signal (16) by taking into account the detected carbon monoxide (8) in order to increase the combustion temperature, and
c) adjusting a guide vanes angle (10) of the variable guide vanes (13) according to the determined guide vanes angle control signal (16).

## Description

The invention relates to a method for operating a gas turbine.

A gas turbine comprises a compressor, a combustion chamber and a turbine. Fuels like natural gas, diesel, or landfill gas are generally combusted in the combustion chamber with the compressed air from the compressor. The heated and compressed air will drive the turbine which drives the compressor and, for example a generator which generates electric power.

A significant advantage of gas turbines is their ability to be turned on and off within minutes, and therefore supplying power during a peak demand. Since single cycle (gas turbine only) power plants are less efficient than combined cycle plants, they are usually used as peaking power plants, which operate anywhere from several hours per day to a few dozen hours per year-depending on the electricity demand and the generating capacity of the region. In areas with a shortage of base-load and load following power plant capacity or with low fuel costs, a gas turbine power plant may regularly operate most hours of the day.

The market demand for low carbon monoxide emissions at low part loads has in the past been close to non-existent, emission guarantees has historically only been given for loads above 50% or 70% load. With the increasing demand for flexible power plant operation, a demand for increased emission turn down has arisen.

For gas turbines in general, the carbon monoxide emission turn down is governed by boundary conditions at the inlet and outlet of the combustion chamber in combination with design of the combustion system.

The presence of carbon monoxide emission in exhaust gas is due to quenching of the oxidization processes to carbon dioxide. One of the major parameters influencing quenching is the temperature within the combustion chamber. An increased temperature will improve the speed of the kinetic reaction and thereby reduce the amount of carbon monoxide emissions the exhaust gas.

One way to increase the temperature within the combustion chamber is to reduce the inlet air mass flow. A reduction of the inlet air mass flow has historically been achieved by the utilization of compressor bleed air systems to either the gas turbine inlet or the exhaust gas, and/or utilization of combustion chamber air staging. However, even though these systems have proven to be efficient in reducing the air mass flow, they also have a very negative impact on the overall efficiency of the units (i.e. increase fuel flow, customer operational cost).

Since the historical demand for low carbon oxide emissions below 50% load has been close to non-existent, the need for efficient ways to reduce the inlet airflow has been limited for the majority of gas turbine models. As described in the section above, the present solution to reduce the inlet airflow has been utilization of compressor bleed air systems, and/or utilization of combustion chamber air staging.

It is therefore an object of the present invention to provide a method for operating a gas turbine with reduced airflow and improved efficiency of the units.

The features of the patent claims 1, 5, 9 and 10 solve the object. Preferred embodiments are given in the further patent claims.

The method according to the invention for operating a power device, wherein the gas turbine comprises a compressor with variable guide vanes, a combustion chamber, a turbine, and an exhaust gas carbon monoxide sensor, comprises the steps of:
a) detecting carbon monoxide in the exhaust gas of the gas turbine with the exhaust gas carbon monoxide sensor,
b) determining a guide vanes angle control signal by taking into account the detected carbon monoxide in order to increase the combustion temperature, and
c) adjusting a guide vanes angle of the variable guide vanes according to the determined guide vanes angle control signal.

Thus, the compressor with variable guide vanes will be used to optimize the inlet boundary conditions, e.g. to reduce the inlet air mass flow by changing the guide vanes angle in order to increase the combustion temperature and therefore the speed of the kinetic reaction. This will reduce the amount of carbon monoxide emissions of the exhaust gas.

Moreover, the gas turbine will be operated in a closed-loop manner, e.g. the control action of the controller of the gas turbine is dependent on feedback from the process resulting to carbon monoxide in the exhaust gas. For example, if the determined carbon monoxide in the exhaust gas is above a given limit, the controller generates a control signal to lower the carbon monoxide in the exhaust gas by reducing the inlet air mass flow. Accordingly, a guide vanes angle control signal is generated which will cause a change of the guide vanes angle resulting in a lower inlet air mass flow.

Therefore, the invention allows a flexible optimisation of the inlet boundary conditions to reduce the amount of carbon monoxide emissions of the exhaust gas.

It is preferred that a temperature sensor is used to measure an exhaust gas temperature, wherein the determined exhaust gas temperature is taken into account to keep the exhaust gas temperature under a temperature threshold. That allows it to limit to exhaust temperature and therefore to fulfil specific market demands. Moreover, the exhaust gas temperature depends of the temperature in the combustion chamber. Thus, the exhaust gas temperature is indicative for the temperature in the combustion chamber and therefore for the speed of the kinetic reaction. Therefore, taking into account the exhaust gas temperature will improve the performance of the gas turbine operated in a closed loop-manner, e.g. to keep the amount of carbon monoxide emissions of the exhaust gas as low as possible. One measure to keep the exhaust gas temperature under the temperature threshold can be to amend the guide vanes angle by modifying the guide vanes angle control signal resulting in an increased inlet air mass flow. However, it is also possible to take other measures in addition or alternatively to keep the exhaust gas temperature under the temperature threshold.

It is preferred that a compressor pressure ratio is determined, wherein the determined compressor pressure ratio is taken into account in order to avoid a compressor surge. A compressor surge is a complete disruption of the flow through the compressor of the gas turbine. Such a compressor surge can take place if the compressor pumps only air in a stable manner up to a certain pressure ratio. Beyond this value, the flow will break down and become unstable. This occurs at what is known as the surge line on a compressor map. Such a compressor map is a chart created for the compressor of a gas turbine. They may based on compressor rig test results or predicted by a special computer program. On the x-axis of such a compressor map is usually the compressor entry mass flow and on the y-axis of such a compressor map is a pressure ratio of a compressor inlet pressure and a compressor outlet pressure. Above the surge, line is a region of unstable flow. Thus, the gas turbine is configured to avoid that area when determining a guide vanes angle control signal to avoid a compressor surge. One measure to avoid a compressor surge can be to amend the guide vanes angle by modifying the guide vanes angle control signal resulting in an amended inlet air mass flow. However, it is also possible to take other measures in addition or alternatively to avoid a compressor surge, for example opening of a blow-off or recycling valve.

It is preferred that a compressor pressure ratio is determined by using a compressor inlet pressure and a compressor outlet pressure. In other words, a compressor surge margin is monitored. The monitored surge margin provides a measure of how close an operating point of the compressor is to surge. Thus, the determination of compressor pressure ratio by using the compressor inlet pressure and the compressor outlet pressure allows it easily to avoid a compressor surge.

The above mentioned attributes and other features and advantages of this invention and the manner of attaining them will become more apparent and the invention itself will be better understood by reference to the following description of embodiments of the invention taken in conjunction with the following drawing, wherein
- Figure 1: shows a schematic drawing of a gas turbine,
- Figure 2: shows a schematic drawing of a closed loop or feed-back configuration, and
- Figure 3: shows a schematic flowchart of a method for operating a gas turbine as shown in Figure 1.

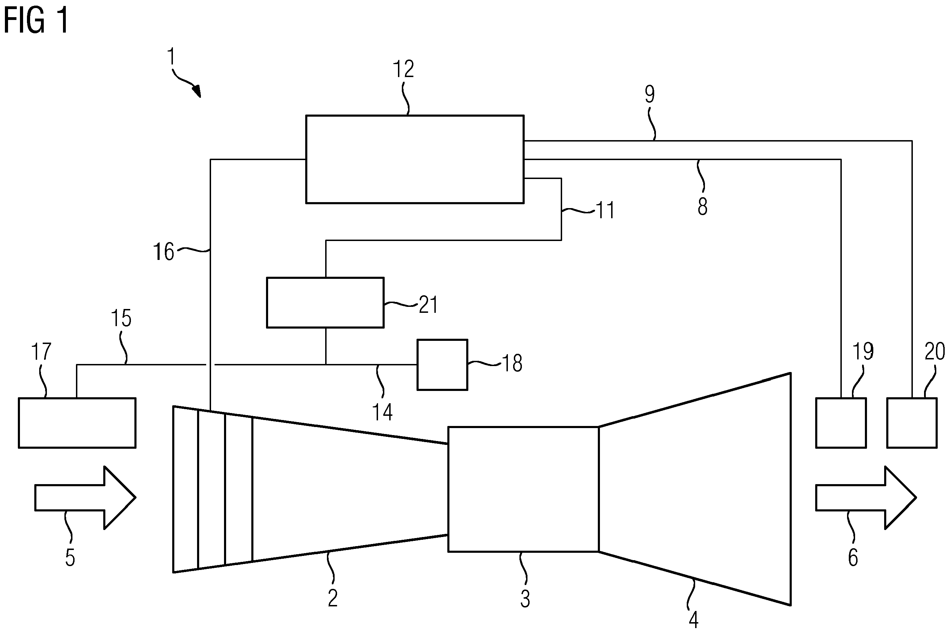

Figure 1 shows a gas turbine, for example a gas turbine 1 of a power plant that drives a generator (not shown) which generates electric power.

The gas turbine 1 is a single shaft gas turbine 1. However, the gas turbine 1 may also be a multi-shaft turbine 1.

The gas turbine 1 comprises a compressor 2, a combustion chamber 3 and a turbine 4 mounted on the shaft. For example, fuels like natural gas, diesel, or landfill gas will be combusted in the combustion chamber 3 with compressed air 5 from the compressor. The heated and compressed air drives the turbine 4, which drives the compressor 2 and the generator, which generates electric power. Finally, exhaust gas 6 leaves the turbine 4.

The compressor 2 has rotor blades (not shown) and variable guide vanes 13. An angle 10 (not shown in Figure 1) of the variable guide vanes 13 is adjustable by an actuator 7 (also not shown in Figure 1). The actuator 7 can be activated and deactivated by a control signal 16.

Moreover, the gas turbine 1 has downstream the turbine 4 an exhaust gas carbon monoxide sensor 19 sensitive to carbon monoxide 8 in the exhaust gas 6 of the turbine 4. Additionally, the gas turbine 1 has downstream the turbine 4 an exhaust gas temperature sensor 20 configured to measure the exhaust gas temperature 9 of the exhaust gas 6 of the turbine 4.

Further, the gas turbine 1 has upstream the compressor 2 a first pressure sensor 17 adapted to measure a compressor inlet pressure 15. A second pressure sensor 18 is downstream of the compressor 2 and upstream of the combustion chamber 3. The second pressure sensor 18 is adapted to measure a compressor outlet pressure 14.

In normal use, e.g. with loads above 50 % or 70 %, fuels are combusted in the combustion chamber 3 with the compressed air 5 from the compressor 2. The heated and compressed air drives the turbine 4, which drives the compressor 2 and the generator, which generates electric power.

However, if the gas turbine 1 is driven with loads lower than 50%, for example, the content of carbon monoxide 8 in the exhaust gas 6 increases due to quenching of the oxidization processes to carbon dioxide lowering the temperature in the combustion chamber 3.

To reduce the amount of carbon monoxide emissions a controller 12 is provided. The controller 12 comprises hardware and/or software components like a computer program product to fulfil the tasks, which will, described in following in detail.

The controller 12 operates the gas turbine 1 in a closed-loop or feedback manner, e.g. the control action from the controller 12 is dependent on feedback from the process resulting to carbon monoxide 8 in the exhaust gas 6.

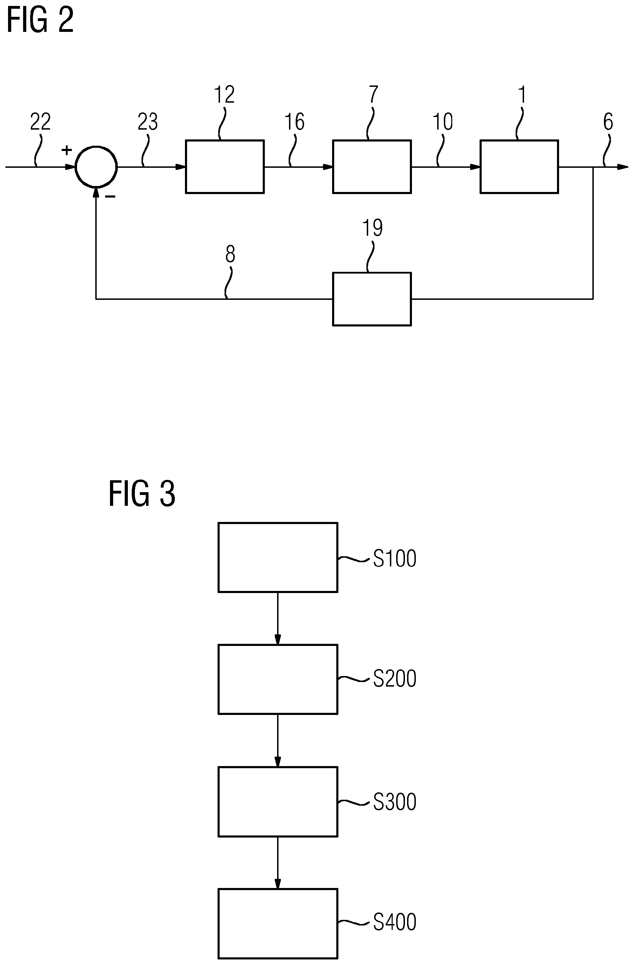

To explain this more in detail, now additionally reference is made to Figure 2 showing a SISO control loop, e.g. a single-input-single-output (SISO) control system.

The exhaust gas 6 of the gas turbine 1 can be considered as output of the system, or as manipulated variable. The exhaust gas sensor 19 measures the carbon monoxide 8, e.g. the carbon monoxide content of the exhaust gas 6 of the gas turbine 1. Thus, the carbon monoxide 8 can be considered as process value.

The carbon monoxide 8 is fed back to a comparison with a reference value 22 or set point for the carbon monoxide. The controller 12 takes the error 23, e.g. difference between the reference value 22 and the carbon monoxide 8 to change the guide vanes angle control signal 16 as an input to the gas turbine 1. Thus, the guide vanes angle control signal 16 can be considered as controller output applied to the actuator 7. Finally, the actuator 7 adjusting the variable guide vanes 13 can be considered as final control element.

However, the controller 12 may also be a MIMO control loop, e.g. a multi-input-multi-output system. Moreover, the controller 12 may be a two-input-one output system with the carbon monoxide 8 and the exhaust gas temperature 9 as input and exhaust gas 6 as output.

Thus, the controller 12 is adapted to read in the carbon monoxide 8, measured with the exhaust gas sensor 19, and the exhaust gas temperature 9, measured with the exhaust gas temperature sensor 20.

Moreover, the controller 12 is adapted to read in a compressor pressure ratio 11, which is provided by a subtractor 21. The subtractor 21 reads in the compressor inlet pressure 15 and the compressor outlet pressure 14 and is configured to determine a compressor pressure ratio 11 based on the compressor inlet pressure 15 and on the compressor outlet pressure 14.

Further, the controller 12 is adapted to determine the guide vanes angle control signal 16 by taking into account the detected carbon monoxide 8, the determined exhaust gas temperature 9, and the compressor pressure ratio 11.

The detected carbon monoxide 8 and the determined exhaust gas temperature 9 are used to determine optimized inlet boundary conditions that reduce the inlet air mass flow by changing the guide vanes angle 10 in order to increase the combustion temperature. Moreover, the determined exhaust gas temperature 9 could take into account to keep the exhaust gas temperature 9 under a temperature threshold in order to fulfil specific market demands.

For example, if the determined carbon monoxide 8 in the exhaust gas 6 is above a given limit defined by the reference value 22, the controller 12 generates the control signal 16 to lower the carbon monoxide 8 in the exhaust gas 6 by reducing the inlet air mass flow.

Further, to keep the exhaust gas temperature 9 under the temperature threshold the guide vanes angle 10 can be modified resulting in an increased inlet air mass flow.

Moreover, to avoid a compressor surge, the determined compressor pressure ratio 11 is taking into account to the determination of the guide vanes angle control signal 16.

To do so, the controller 12 uses a compressor map with a surge line. In the compressor map is above the surge line a region of unstable flow. The compressor map may be a compressor-operating map in tabular form, for example.

The controller 12 is configured to avoid that area above the surge line when determining a guide vanes angle control signal 16.

Further, the compressor surge margin provides a measure of how close an operating point of the compressor 2 is to surge. Accordingly, the compressor pressure 11 allows it easily to avoid a compressor surge.

Now, additionally reference is made to Figure 3 showing a schematic flowchart of a method for operating the gas turbine 1.

In use, with loads above 50 % or 70 %, fuels are combusted in the combustion chamber 3 with the compressed air from the compressor. The heated and compressed air drives the turbine 4, which drives the compressor 2 and the generator, which generates electric power.

If the load is reduced, for example under 50%, in a first step s100 the controller 12 reads in the carbon monoxide 8, the exhaust gas temperature 9, the compressor inlet pressure 15 and the compressor outlet pressure 14.

In a further step s200, if the determined carbon monoxide 8 in the exhaust gas 6 is above a given limit, the controller 12 generates the control signal 16 to lower the carbon monoxide 8 in the exhaust gas 6 by reducing the inlet air mass flow.

In a next step s300, the determined compressor pressure ratio 11 is taking into account to determine the guide vanes angle control signal 16 to avoid a compressor surge by the usage of the compressor map with a surge line.

A model of the gas turbine 1 can be used to determine the change of the compressor inlet pressure 15 and the compressor outlet pressure 14 caused by the determined control signal 16. The result can be compared, e.g. mapped in the compressor map.

If the mapped result lies in a region under the surge line a stable flow is expected. Thus, the determined control signal 16 can be used to change the guide vanes angle 10 the of the variable guide vanes 13. Moreover, as an additional or alternative measure, a blow-off or recycling valve (both not shown) of the gas turbine 1 can be opened.
However, if the mapped result lies in a region above the surge line applying guide vanes angle control signal 16 would lead to an unstable flow. Accordingly, the controller 12 amended the determined control signal 16 in such a way that an unstable flow is avoided.

Thus, the controller 12 is configured not to choose guide vanes angles 10 that would lead to an operating point of the compressor 2 in that area above the surge line, e.g. in a region of unstable flow.

Then, in a next step the guide vanes angle 10 is adjusted according to the determined guide vanes angle control signal 16 driving the actuator 7 to change the guide vanes angle 10 of the variable guide vanes 13.

Thus, the compressor 2 with variable guide vanes 13 is used to reduce the inlet air mass flow by changing the guide vanes angle 10 in order to increase the combustion temperature and therefore the speed of the kinetic reaction. This will reduce the amount of CO emissions of the exhaust gas 6.

In a next step s400, the exhaust gas temperature 9 is compared with a temperature threshold. If the exhaust gas temperature 9 is above the temperature threshold the controller, 12 will modify the guide vanes angle 10 in an increased inlet air mass flow. That will keep the exhaust temperature 9 under a specific limit defined by specific market demands.

In should be noted that the sequence of the steps s100 to s400 can be amended, for example, the sequence of the steps S300 and s400 can be changed. Moreover, the controller 12 can be configured to carry out one or more steps of the steps s100 to s400 simultaneously.

Although the invention is described in detail by the preferred embodiment, the invention is not constrained by the disclosed examples and other variations can be derived by the person skilled in the art, without leaving the extent of the protection of the invention.

## Claims

1. Method for operating a gas turbine (1), the gas turbine (1) comprises a compressor (2) with variable guide vanes (13), a combustion chamber (3), a turbine (4), and an exhaust gas carbon monoxide sensor (19), comprising the steps of:
a) detecting carbon monoxide (8) in the exhaust gas (6) of the gas turbine (1) with the exhaust gas carbon monoxide sensor (19),
b) determining a guide vanes angle control signal (16) by taking into account the detected carbon monoxide (8) in order to increase the combustion temperature, and
c) adjusting a guide vanes angle (10) of the variable guide vanes (13) according to the determined guide vanes angle control signal (16).

2. Method according to claim 1, wherein a temperature sensor (20) is used to measure an exhaust gas temperature (9), wherein the determined exhaust gas temperature (9) is taken into account to keep the exhaust gas temperature (9) under a temperature threshold.

3. Method according to claim 1 or 2, wherein a compressor pressure ratio (11) is determined, wherein the determined compressor pressure ratio (11) is taken into account in order to avoid a compressor surge.

4. Method according to claim 3, wherein a compressor pressure ratio (11) is determined by using a compressor inlet pressure (15) and a compressor outlet pressure (14).

5. Gas turbine (1), comprising a compressor (2) with variable guide vanes (13), a combustion chamber (3), a turbine (4), and an exhaust gas carbon monoxide sensor (19), wherein the gas turbine (1) is configured to detect carbon monoxide (8) in the exhaust gas (6) of the gas turbine (1) with the exhaust gas carbon monoxide sensor (19), to determine a guide vanes angle control signal (16) by taking into account the detected carbon monoxide (8) in order to increase the combustion temperature, and to adjust a guide vanes angle (10) of the variable guide vanes (13) according to the determined guide vanes angle control signal (16).

6. Gas turbine (1) according to claim 5, wherein the gas turbine (1) comprises a temperature sensor (20) configured to measure an exhaust gas temperature (9), wherein the gas turbine (1) is configured to take the determined exhaust gas temperature (9) into account to keep the exhaust gas temperature (9) under a temperature threshold.

7. Gas turbine (1) according to claim 5 or 6, wherein the gas turbine (1) is configured to determine a compressor pressure ratio (11), wherein the gas turbine (1) is configured to take the determined compressor pressure ratio (11) into account in order to avoid a compressor surge.

8. Gas turbine (1) according to claim 7, wherein the gas turbine (1) is configured to determine a compressor pressure ratio (11) by using a compressor inlet pressure (15) and a compressor outlet pressure (14).

9. Controller (12) for a gas turbine (1) according to one of the claims 5 to 8.

10. Computer program product comprising instructions to cause the controller (12) according to claim 9 to execute the steps of the method of one of the claims 1 to 4.
